(19) Europäisches Patentamt
European Patent Office
Office européen des brevets

(11) Veröffentlichungsnummer: **0 244 601**
**A2**

(12) # EUROPÄISCHE PATENTANMELDUNG

(21) Anmeldenummer: **87103871.7**

(22) Anmeldetag: **17.03.87**

(51) Int. Cl.⁴: **C08L 77/00**, C08L 23/02, C08L 53/00

(30) Priorität: **29.03.86 DE 3610596**

(43) Veröffentlichungstag der Anmeldung: **11.11.87 Patentblatt 87/46**

(84) Benannte Vertragsstaaten: **DE ES FR GB IT NL**

(71) Anmelder: **BAYER AG**
**Konzernverwaltung RP Patentabteilung**
**D-5090 Leverkusen 1 Bayerwerk(DE)**

(72) Erfinder: **Köhler, Karl-Heinz, Dr.**
**Buschstrasse 165**
**D-4150 Krefeld(DE)**
Erfinder: **Reinking, Klaus, Dr.**
**Robert-Stolz-Strasse 16b**
**D-5632 Wermelskirchen(DE)**
Erfinder: **Weber, Gunter, Dr.**
**Buschstrasse 169**
**D-4150 Krefeld(DE)**
Erfinder: **Prinz, Richard, Dr.**
**Moltkestrasse 30**
**D-5090 Leverkusen 1(DE)**

(54) **Thermoplastische Polymer-Mischungen.**

(57) Thermoplastische Formmassen aus

I. 1-99 Gew.-% thermoplastischen Polyamiden und

II. 99-1 Gew.-% thermoplastischen Polyolefinen, enthaltend zusätzlich

III. 0,1-10 Gew.%, bezogen auf I + II, an Blockcopolyamiden, die 0,1-80 Gew.-% lineare, hydrierte Poly-1,3-dien-Einheiten (Blöcke) mit einer Molmasse Mn von 600-6000 und 99,9-20 Gew.-% Polyamid-Einheiten (Blöcke) aufweisen. Die Blockcopolyamide III haben sich als besonders wirksame Polymerdispergatoren in diesem System herausgestellt.

EP 0 244 601 A2

# Thermoplastische Polymer-Mischungen

Die Erfindung betrifft thermoplastische Mischungen aus Polyamiden, aus Polyolefinen aus einfach ungesättigten Kohlenwasserstoffen und Blockcopolymeren, die Polyamideinheiten und hydrierte Polydien-Einheiten enthalten.

Polyamide werden zur Verbesserung ihrer mechanischen Eigenschaften, insbesondere der Schlagzähigkeit, unter Polyolefinen, wie z.B. modifizierten Polyethylenen oder EPDM-Kautschuken gemischt. Mischungen aus Polyamiden und Polyolefinen aus einfach ungesättigtem Kohlenwasserstoff besitzen eine hohe Entmischungstendenz, die zu Delaminierungs-Erscheinungen am Formkörper führt. Solche Mischungen sind daher für die meisten praktischen Anwendungen unbrauchbar. Es hat deshalb an Versuchen nicht gefehlt, die Mischbarkeit der an sich "unverträglichen" Polymeren zu erhöhen.

Nach der Lehre der DE-OS 2 622 973, DE-OS 3 022 295 und EP-A-0 073 036 erhält man weitgehend homogene Polyamid-Polyolefin-Mischungen, insbesondere Polyamid/Polyethylen oder Polyamid/EPDM-Mischungen mit verbesserten Zähigkeits-Eigenschaften durch Mitverwendung von Copolymeren aus Ethylen und/oder Propylen und/oder Dienen sowie ungesättigten Carbonsäurederivaten bzw. ungesättigten, gegebenenfalls neutralisierten Carbonsäuren.

Abgesehen von der Modifizierung der Polyolefin-Komponente kann eine bessere Mischbarkeit von Polyamid und z.B. unmodifiziertem Polyethylen dadurch erreicht werden, daß Kleinere Mengen eines Pfropfpolymerisates von Carboxylmodifiziertem Polyethylen auf Polyamid 6 der geschmolzenen Mischung aus PA/PE hinzugesetzt werden (DE-OS 2 426 671).

Eine andere Möglichkeit zur Erhöhung der Verträglichkeit von Polyamid-Polyolefin-Mischungen besteht nach der Lehre des DE-OS 2 804 948 in der Herstellung von ineinandergreifenden Polymer-Netzwerken, ohne die Mischbarkeit im eigentlichen Sinn zu erhöhen; diese Erhöhung der Verträglichkeit wird durch Zusatz von hydrierten Dreiblock-SBS-Copolymerisation erreicht, in denen hochmolekulare, hydrierte Polybutadien-(B)-Segmente (Molmassen bis 300 000) mit hochmolekularen Polystyrol-(S)-Einheiten (Molmassen bis 125 000) verknüpft sind.

Der Nachteil der bekannten Methoden besteht darin, daß sie entweder nicht universell anwendbar sind oder nur zu einer unzureichenden Vermischung der Polymer-Komponenten führen.

Es bestand daher ein Bedarf, möglichst viele verschiedene Polyolefine, vorzugsweise Polyolefine aus einfach ungesättigten Kohlenwasserstoffen, gegebenenfalls auch Copolymerisate mit ungesättigten CHO-Verbindungen, und verschiedene Polyamide mit Hilfe von möglichst universell verwendbaren Polymerdispergatoren weitgehend homogen zu vermischen und dabei Eigenschaftsverbesserungen herbeizuführen.

Erfindungsgemäß gelang dies, indem thermoplastische Blockcopolyamide, die Polyamid-Blöcke und Polyalkylen-Blöcke mit einem Molekulargewicht $M_n$ von 600-6000, vorzugsweise von 1000-3000 enthalten, vorzugsweise der Schmelze von Polyamiden und Polyolefinen zugesetzt wurden. Formkörper aus den erfindungsgemäßen Polymer-Mischungen zeichnen sich durch eine verbesserte Oberfläche, verbesserte mechanische Eigenschaften und einer sehr geringen Tendenz zum Weißbruch aus.

Dies ist insofern überraschend, da die erfindungsgemäß verwendeten Blockcopolyamide mit relativ niedrigmolekularen Polyalkyleneinheiten in der Lage sind, sehr hochmolekulare Polyolefine mit Molekulargewichten größer 50.000, vorzugsweise größer 100.000 in Polyamiden zu dispergieren. Die bisher bekannten Blockpolymeren oder Pfropfpolymeren enthalten hydrierte Polybutadien-oder Polyethylen-Blöcke mit Molekulargewichten in der Größenordnung der Molekulargewichte der zu vermischenden Polyolefine. Andererseits zeigen Blockcopolyamide mit Polyalkylen-Blöcke mit Molekulargewichten $M_n$ kleiner 600 keine dispergierende Wirkung.

Gegenstand der Erfindung sind daher thermoplastische Formmassen aus

I. 1-99 Gew.%, vorzugsweise 10-90 Gew.%, besonders bevorzugt 20-80 Gew.%, thermoplastischen Polyamiden und

II. 99-1 Gew.%, vorzugsweise 90-10 Gew.%, besonders bevorzugt 80-20 Gew.%, thermoplastischen Polyolefinen, insbesondere Kohlenwasserstoff-Polyolefinen,

enthaltend zusätzlich

III. 0,1 - 10 Gew.%, vorzugsweise 1-5 Gew.%, bezogen auf I + II. an Blockcopolyamiden, die 0,1-80 Gew.%, vorzugsweise 1-80 Gew.-%, insbesondere 10-65 Gew.-%, lineare hydrierte Poly-1,3-dien-Einheiten mit einer Molmasse $M_n$ von 600 bis 6000, vorzugsweise 1000-3000, und 99,9-20 Gew.-% vorzugsweise 99-80 Gew.-%, insbesondere 90-35 Gew.-% Polyamid-Einheiten aufweisen.

Darüber hinaus können die Polymermischungen Füll-und Verstärkungsstoffe, Stabilisatoren und Farbmittel, sowie übliche Verarbeitungshilfsmittel enthalten.

Als thermoplastische Polyamide (I) können Polyadditionsprodukte von Lactamen mit 4-12 C-Atomen im Ring, insbesondere von ε-Caprolactamen, Undecanlactam, Dodecanlactam, sowie Polykondensationsprodukte entsprechender Aminocarbonsäuren, wie z.B. Aminocapronsäure, 11-Aminoundecansäure, 12-Aminododecansäure verwendet werden.

Außerdem können als Polyamide Polykondensate aus Diaminen und Dicarbonsäuren eingesetzt werden, wobei als Dicarbon säuren aliphatische, alicyclische oder aromatische Dicarbonsäuren eingesetzt werden können, wie z.B. Bernstein-, Adipen-, Kork-, Azelain-, Sebacin-, Undecandi-, Dodecandicarbonsäure, Cyclohexandicarbonsäure, Terephthalsäure, Isophthalsäure, geeignete Diamine sind aliphatische, alicyclische oder aromatische Diamine wie z.B.: Tetramethylen-, Hexamethylen-, m-und/oder p-Xylylendiamin, 2,2,4-trimethylhexamethylendiamin, Isophorondiamin, Bis-(4-aminocyclohexyl)-methan oder -propan. Die eingesetzten Polyamide können sowohl Homopolyamide sein, wie z.B. PA-6, PA-11, PA-12, PA-6,6, als auch Copolyamide aus verschiedenen der genannten Monomerbausteine, sowie Mischungen verschiedener Polyamide und Copolyamide.

Besonders bevorzugte Polyamide sind PA-6 und PA-6,6.

Es werden Polyamide mit einer relativen Viskosität (10 g/l m-Kresol 25° C) von mindestens 2, vorzugsweise größer 2,5 und besonders bevorzugt größer 3,0 verwendet.

Als thermoplastische Polyolefine (II) können Polymere folgender Konstitutionsformel verwendet werden
$H-A_{(n)}-B_{(m)}-C_{(k)}-H$
wobei A, B, C folgende Monomer-Einheiten bedeuten können:

A $-CH_2-CH_2-$, $-CH_2-\underset{R}{\underset{|}{C}}H-$

mit R = eine $CH_3$,
$C_2$-$C_{10}$-Alkyl-,
$C_2$-$C_{10}$-Alkenyl-,
$C_6$-$C_{12}$-Aryl-, -Alkylarylgruppe

B steht für $-CO_2H$ oder $-CO_2M$ mit M = Na, K, Ca, Zn,

C steht für einen 1,3-Butadien-, Isopren-, 1,4-Hexadien-, Ethylidennorbornen-, Dicyclopentadien-, cis, cis-Cyclooctadien-1,5 oder Methyl-endomethylen-hexahydronapthalinrest.

Bevorzugte Monomer-Einheiten sind:

$$-CH_2-CH_2-,\quad -CH_2-\underset{CH_3}{\underset{|}{C}}H-,\quad \text{Ethylidennorbornen.}$$

Die obengenannten Monomereinheiten sind in der Konstitutionsformel in folgenden Molenbrüchen enthalten:

n = 0,8-1, vorzugsweise
m = 0-0,2, vorzugsweise
k = 0-0,1, vorzugsweise
wobei die Summe n + m + k immer 1 ergeben muß. Erfindungsgemäß verwendete thermoplastische Polyolefine können sowohl Homopolymerisate als auch Copolymerisate sowie Mischungen verschiedener Homo-und/oder Co-Polymerisate sein. Beispiele für besonders geeignete thermoplastische Polyolefine sind Polyethylene, Polypropylene, Ethylen-Propylen-(Dien)-Kautschuke, sowie Mischungen aus Polypropylen und Polyethylenen, Mischungen aus Polypropylen und Ethylen-Propylen-Dien-Kautschuken.

Geeignete Polyethylene sind Homopolyethylene hergestellt nach dem hochdruck-Verfahren mit einer Dichte von 0,915 - 0,930 g/cm³ sowie Homopolyethylene hergestellt nach dem Niederdruck-Verfahren mit einer Dichte von 0,942 - 0,95 g/cm³. Die Molmassen der verwendeten Polyolefine sollten oberhalb 50.000, vorzugsweise oberhalb 100.000 liegen. Sie können übliche Stabilisatoren und Farbmittel enthalten.

Neben Polyethylen können auch Ethylencopolymere oder deren Mischungen mit Polyethylenen verwendet werden. Geeignete Copolymere sind z.B. Copolymere des Ethylens mit Acrylsäure und/oder Maleinsäure bzw. Maleinsäurehydrid, und/oder Fumarsäure und/oder Vinylacetat, wobei der Anteil an Comonomeren 0,2-20 Mol% betragen kann. Die Carboxylgruppen können ganz oder teilweise neutralisiert sein, die Anhydridgruppen können ganz oder teilweise in Carboxylgruppen überführt und die Acetatgruppen können ganz oder teilweise hydrolysiert sein. Die Molekulargewichte der Copolymerisate sollen größer 10.000, vorzugsweise größer 50.000 sein.

Die thermoplastischen Polypropylene sind vorzugsweise isotaktische Polymere. Es kann auch ein Copolymeres des Propylens mit Ethylen oder einem beliebigen anderen copolymerisierbaren $\alpha$-Olefin, dessen Anteil 1-20 Mol% bezogen auf Copolymer betragen kann, verwendet werden.

Geeignete EPM-bzw EPDM-Kautschuke enthalten maximal 5 Mol% einer Dien-Komponente wie z.B. Hexadien, Dicyclopentadien oder Ethylidennorbornen. Bevorzugt verwendet werden EPDM-Kautschuke mit Ethylidennorbornen als Terkomponente. Der Kautschuk kann sowohl ein statistisches als auch ein Sequenz-EPDM sein.

Die erfindungsgemäß als Polymerdispergatoren eingesetzten Blockcopolyamide (III) werden vorzugsweise nach den in EP 83 434 beschriebenen Verfahren hergestellt, wobei

III.1) 0,1-80 Gew.-%, vorzugsweise 1-80 Gew-%, insbesondere 10-65 Gew.-% hydrierter, telecheler Dienpolymerisate mit endständigen Carbonsäure-, Carbonsäureester-, Carbonat-oder Hydroxyl-Gruppen, vorzugsweise $NH_2$-Gruppen und einem Molekulargewicht $M_n$ von 600 bis 6000, vorzugsweise von 1000 bis 3000 und

III.2) 99,9-20 Gew-%, vorzugsweise 99-20 Gew.-%, insbesondere 90-35 Gew% Polyamid-bildenden Komponenten umgesetzt werden und durch Einsatz entsprechender Menge von Dicarbonsäuren oder Diaminen eine Äquivalenz der reaktiven Endgruppen aus 1) und 2) erreicht wird.

Als III) werden somit Blockcopolyamide verwendet, die 0,1-80, vorzugsweise 1-80 und insbesondere 10-65 Gew.-% der telechelen Dienpolymerisate mit den genannten Endgruppen neben entsprechenden Mengen an üblichen Polyamideinheiten enthalten.

Die hydrierten Polydiene werden durch katalytische Hydrierung von vorzugsweise linearen Verbindungen mit 2 endständigen reaktiven Gruppen der allgemeinen Formel

$R^1$-$R^9$-$(X)_n$-$R^9$-$R^1$

erhalten,

in der

X = 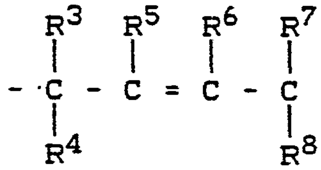 und/oder

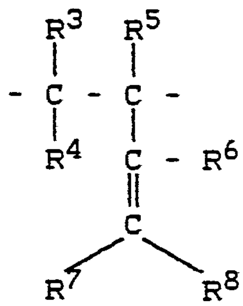

mit

$R^3$ bis $R^8$ = gleich oder verschieden, einen $C_1$-$C_4$-Alkylrest, H oder ein Halogenatom (vorzugsweise Cl, Br, J),

n = 4 bis 110;

$R^9$ = eine Einfachbindung oder eine Alkylidengruppe mit

$C_1$-$C_3$, wie z.B. 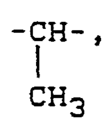, $-CH_2-$, $-C(CH_3)_2-$,

$R^1$ = $-COOR^2$, -OH, $-CH_2-NH_2$, $-OCOOR^2$ mit

$R^2$ = ein Alkylrest mit $C_1$-$C_{10}$ oder Cycloalkylrest mit $C_5$-$C_{10}$ oder Wasserstoff - außer bei $-O-CO-OR^2$ - bedeuten.

Die für die Herstellung der hydrierten Polydiene verwendeten Polydiene lassen sich z.B. nach den in der DE-OS 2 900 880 und der DE-OS 2 908 298 beschriebenen Verfahren aus gegebenenfalls substituierten 1,3-Dienen, wie z.B. Butadien, Isopren, Dimethylbutadien und Chloropren und Radikalinitiatoren, wie z.B. Dialkylperoxidicarbonaten, Azodicarbonsäureestern oder Azodicarbonsäurenitrilen vorzugsweise in einer Massepolymerisation herstellen. Aus den dabei erhaltenen Polydienen mit endständigen Carbonatestergruppen können Polydiene mit endständigen Hydroxygruppen durch Hydrolyse oder aus Polydienen mit endständigen Carbonsäureestergruppen durch Reduktion der Estergruppe hergestellt werden. Polydiene mit endständigen Nitrilgruppen können durch selektive Hydrierung in Aminoterminierte Polydiene überführt werden.

In den verwendeten Poly-1,3-dienen sind die Dieneinheiten über 1,2-und/oder 1,4-Positionen miteinander verknüpft. Bevorzugt werden Poly-1,3-diene eingesetzt, bei denen mindestens 50 Mol%, vorzugsweise 70 Mol%, der Monomereinheiten über 1,4-Bindungen miteinander verknüpft sind.

Die Poly-1,3-diene haben ein Molekulargewicht (Zahlenmittel des Molekulargewichtes) Mn von etwa 400 - 6000, bevorzugt 1000 bis 3000, gemessen nach bekannten Methoden wie der Dampfdruckosmose.

Bevorzugte Poly-1,3-diene bestehen aus Einheiten von Butadien, Isopren, Dimethylbutadien und/oder Chloropren und besonders bevorzugt aus Butadien und/oder Isopren.

Die Hydrierung der Poly-1,3-diene wird im allgemeinen unter Druck in Gegenwart von üblichen Hydrierungs-Katalysatoren durchgeführt.

Die Hydrierung der Poly-1,3-diene mit endständigen Carbonatestergruppen, OH-Gruppen, Carbonsäureester oder Carbon säuregruppen erfolgt z.B. in reinem Wasserstoff an einem Kontakt aus Palladium auf Aktiv-Kohle, wobei nur die Poly-1,3-dien-Kette hydriert wird.

Die Hydrierung der Poly-1,3-diene mit endständigen Nitrilgruppen zu Diaminopolyalkylenen wird z.B. in einem Wasserstoff/Ammoniak-Gemisch an einem reduzierten Cobalt-Kontakt durchgeführt. Unter diesen Bedingungen wird sowohl die Poly-1,3-dien-Kette als auch die Nitril-Endgruppe hydriert, wobei aus der Nitril-eine primäre Amino-methylen-Gruppen entsteht.

Nach einem anderen Herstellungsverfahren werden in der 1. Stufe an einem $Pd/Al_2O_3$-oder Pd/C-Katalysator die C = C-Doppelbindungen und in einer 2 Stufe an einem Raney-Katalysator, z.B. Ra-Ni-Fe, die endständigen Nitril-Gruppen hydriert.

Der Hydrierungsgrad sollte bezogen auf den Dien-Anteil im Poly-1,3-dien mindestens 85 Mol%, vorzugsweise mindestens 95 Mol% und besonders bevorzugt 100 Mol%, betragen.

Der Hydriergrad bezogen auf den Anteil an Nitril-Endgruppen sollte größer 90 Mol% sein, vorzugsweise größer 95 Mol%, wobei der Anteil an primären Aminogruppen mindestens 90%, vorzugsweise mehr als 95% betragen sollte.

Die Mikrostruktur der Poly-1,3-diene hinsichtlich 1,4/1,2-Verknüpfung der Dien-Einheiten reproduziert sich in den hydrierten Produkten in Form von Tetramethylen-Einheiten bzw. Ethyl-substituierten Ethyleneinheiten.

Die Polyamid-Blöcke der Blockcopolymeren können aus Lactamen mit 4-bis 12-Atomen im Ring oder entsprechenden $\omega$-Aminocarbonsäuren, wie z.B. $\epsilon$-Caprolactam, Undekanlactam, Dodekanlactam, 11-Aminoundekansäure, 12-Aminododekansäure, hergestellt werden.

Die Polyamidkomponente kann auch ein Kondensationsprodukt einer aliphatischen, alicyclischen oder aromatischen Dicarbonsäure mit bis zu 12 C-Atomen wie z.B. Bernstein-, Adipin-, Kork-, Azelain-, Sebacin-, Undekandi-, Dodekandisäure, Terephthalsäure, Isophthalsäure, Cyclohexandicarbonsäure mit einem aliphatischen, alicyclischen oder aromatischen Diamin mit 2 bis 12 C-Atomen wie z.B. Hexamethylendiamin, m-und/oder p-Xylylendiamin; 2,2,4-Trimethylhexamethylendiamin, Isophorondiamin, Bis-(4-aminocyclohexyl)-methan oder -propan sein.

Bevorzuge Polyamid-Blöcke sind Polyamid-6 und Polyamid-6,6, besonders bevorzugt ist Polyamid-6. Zur Herstellung der Blockpolymeren werden vorzugsweise hydrierte Polybutadiene mit primären Amino-Endgruppen (Diaminopolyalkylene) verwendet, wobei zur Erreichung der Endgruppen-Äquivalenz äquimolare Mengen aliphatischer Dicarbonsäuren wie z.B. Adipinsäure eingesetzt werden.

Die Synthese der erfindungsgemäßen Blockcopolymere ist nach gängigen Verfahren, wie z.B. der anionischen ode der thermischen Polymerisation möglich, bevorzugt ist die thermische Polykondensation/-addition.

Das Diaminopolyalkylen kann mit der äquimolaren Menge Dicarbonsäure und einer definierten Menge Caprolactam (gegebenenfalls unter Zusatz von Aminohexansäure) unter üblichen Polyamid-Herstellbedingungen in einem Autoklaven oder in einem Reaktionsrohr polykondensiert werden. Zur Erhöhung der Polyalkylen-Molmasse kann, abgesehen von der Verwendung höhermolekularer Diaminopolyalkylene, das Diaminopolyalkylen, wie in EP 83 434 beschrieben, mit Dicarbonsäuren in bestimmten Verhältnissen vorkondensiert werden, um es dann mit Caprolactam zu Copolyamiden zu polykondensieren. Nach beiden Verfahrens-Varianten entstehen Multiblock-Copolymere.

Die erfindungsgemäß verwendeten Blockcopolymeren sollen eine relative Viskosität von 1,5 bis 3,5, vorzugsweise von 1,8 bis 2,5 gemessen in m-Kresol an einer 10 g Polymer/l m-Kresol bei 25° C haben.

Die erfindungsgemäßen Polymer-Mischungen werden vorzugsweise in der Schmelze nach üblichen Methoden vorzugsweise mit Hilfe von Ein-oder Zwei-Wellen-Extrudern oder Knetern in der Schmelze hergestellt. Bevorzugt erfolgt die Herstellung in Zwei-Wellen-Extrudern, wobei die Polyamid-und die Polyolefin-Komponenten gemeinsam mit definierten Mengen des Blockcopolymeren oberhalb der Schmelztemperatur der drei Komponenten compoundiert werden. Die Compoundierung kann so erfolgen, daß das Block-Copolyamid in Granulatform zu den übrigen Komponenten dosiert wird; das Block-Copolyamid kann auch in Form eines 20-50%-igen Konzentrats in einer Polymer-Mischung aus Polyamid und/oder Polyolefin zu den übrigen Komponenten dosiert werden. Diese Variante empfiehlt sich bei Einsatz kleiner Dispergator-Mengen, um eine ausreichende Verteilung in der Mischung zu erreichen.

Die erfindungsgemäßen Polymer-Mischungen zeichnen sich durch eine deutlich verbesserte Reißdehnung, verbesserte Zähigkeit bzw. verbesserte Wechselbiegefestigkeit und eine verbesserte Oberfläche der Formteile aus.

Formkörper aus den erfindungsgemäßen Polymer-Mischungen, weisen außerdem homogene Oberflächen auf und zeigen auch bei starker Wechselbiegebeanspruchung keine Delaminierung. Bei starken Biege-Radien auftretender geringfügiger Weißbruch ist fast vollständig reversibel.

Die Wasseraufnahme bei der Konditionierung ist zum Teil überproportional zu dem Polyamid-Anteil vermindert.

Die erfindungsgemäßen Polyamid-EPDM-Kautschuk-Dispergatormischungen zeigen eine hohe mono- und mehr-axiale Zähigkeit bei Raumtemperatur und -40° C, hohe Reißdehnung und hohen Elastizitäts-Modul.

Erfindungsgemäße Polyamid-Polyethylen-Dispertormischungen zeichnen sich durch eine günstige Kombination von Zähigkeit bei Raumtemperatur und -20° C, Reißdehnung und Festigkeit (Elastizitäts-Modul) aus.

Erfindungsgemäße Polyamid-Polypropylen-Dispergatormischungen weisen eine günstige Kombination von Festigkeit (E-Modul), Zähigkeit bzw. Wechselbiegefestigkeit und Wärmeformbeständigkeit auf.

Mit Hilfe der erfindungsgemäßen Polymerdispergatoren gelingt es in den bekannten, heterogenen Mischungen von Polyamiden und Polyolefinen ohne Polymerdispergator sind die Mehrphasigkeit zu beeinflussen, wobei der Phasendurchmesser der dispersen Phase in der Matrix von > 50 µm, insbesondere > 100 µm im gesamten Mischungsbereich auf kleiner 10 µm, vorzugsweise kleiner als 5 µm abnimmt.

Die erfindungsgemäßen Mischungen können in der üblichen Weise modifiziert werden. Sie können kugel-, plättchen-oder faserförmige Füll-und Verstärkungsstoffe wie z.B. Glasfasern, Glaskugeln, Wollastonit, Asbest, Calciumsulfat-Whiskers, Calciumcarbonat, Kaolin, Quarz, Glimmer, Talkum oder Titandioxid enthalten; darüberhinaus können Stabilisatoren, Formtrennmittel, Fließhilfsmittel, Farbstoffe, Pigmente und übliche Flammschutzmittel eingearbeitet werden.

Die erfindungsgemäßen Polyamid-Polyolefin-Dispergatormischungen können auf üblichen Spritzgußmaschinen zu Formkörpern verarbeitet werden.

Sie werden vorzugsweise zur Herstellung von Formkörpern verwendet, die starken mechanischen Ansprüchen ausgesetzt werden.

Beispiele

I. Eingesetzte Produkte

Komponenten:

1. Polypropylen: Härte nach DIN 53456: 70 $N/mm^2$ bei 358 N Auflage-Gewicht; Schmelzindex MFI nach DIN 53 735 (1970) in (g/10 min): 4(190;5)*), 2(230;2), 9(230;5).

*) Bei der Angabe des Schmelzindex bedeutet die Zahl vor der Klammer die ausgetretene Menge in g, die erste Zahl in der Klammer die Temperatur; die zweite Zahl in der Klammer das Auflagegewicht in kg.

2. Polyethylen : Dichte in ($g/cm^3$), gemessen nach 1-stündiger Temperierung bei 100°C: 0,917-0,920; Schmelzindex MFI nach DIN 53 735 in (g/10min): 1,3-1,8 (190;2,16).

2a. Zn-Ionomer: Ethylen/Methacrylsäure-Copolymer, dessen Carboxyl-Gruppen als Zn-salze vorliegen; 3 Mol% Methacrylsäure bezogen auf Copolymer, Schmelzindex MFI nach DIN 53 735 in (g/10 min): 5 (190; 2,16).

3. EPDM-Kautschuk: Ethylen-Propylen-Ethylidennorbonen-Terpolymerisat, Sequenz-Polymer mit 30 Gew% Polypropylen und ca. 7 Doppelbindungen pro 1000 C-Atome; Dichte: 0,86 $g/cm^3$; Mooney-Viscosität bei 110° C (ML 1+4): 85.

4. Polyamid-6: relative Viscosität $\eta$rel in m-Kresol, 25° C, 1g/l : 3,4-3,6.

5. Polyamid-6,6 : relative Viskosität $\eta$rel in m-Kresol, 25°C, 10 g/l : 3,9-4,1.

6. Glasfaser:
chopped strands, Durchmesser der Faser: 10 µm, Epoxid-Schlichte.

7. Polymerdispergator :
Polyalkylencopolyamid, hergestellt nach folgender Arbeitsvorschrift:

7a. Statistisches Cokondensat (40% PA-6, 60% Polyalkylen)

In einer 1,5 l ölbeheizten Doppelmantel-Glasapparatur mit Metallrührer, Destillationsaufsatz und Bodenablaßöffnung werden 400 g (3,5 Mol) Caprolactam, 55,1 g (0,38 Mol) Adipinsäure und 558,5 g (0,38 Mol) eines Diaminopolyalkylentelechels (Mn 1 500 Vorstufe II) vorgelegt.

Nach mehrmaligem Evakuieren und Belüften mit Inertgas ($N_2$) wird der Reaktor-Inhalt innerhalb von 30 min. auf 200° C (220° C Öl-Temperatur) aufgeheizt, wobei das abgespaltene Reaktionswasser beginnt überzudestillieren. Das Reaktionsgemisch wird 60 min. bei 220° C Öl-Temperatur gerührt, wobei die Schmelze zunehmend viskos wird. Nach dem Aufheizen auf 220° C (250° C Öl-Temperatur) wird die Schmelze noch 75 min. gerührt und dann unter Normaldruck durch ein Wasserbad abgesponnen und granuliert. Nach der Extraktion von Restmengen an Caprolactam mit Wasser wird das farblose, klare Granulat in der festen Phase bei 150° C, 60 min. und 170° C, 1380 min. an einem Rotationsverdampfer bei Normaldruck ($N_2$-Durchfluß) nachkondensiert. Das farblose, opake Granulat hat eine relative Viskosität: $\eta$rel 1.88 (in m-Kresol, bei 75° C, 10 g/l).

7b. Blockcokondensat (60% 2 : 1-Block Diaminotelechel-Adipinsäure)

In der in 7a. beschriebenen Apparatur werden 558,5 g (0.38 Mol) eines hydrierten Diaminopolybutadientelechels (Vorstufe II) Mn 1 500) und 27,55 g (0,19 Mol) Adipinsäure vorgelegt. Nach mehrmaligem Evakuieren und Belüften mit Stickstoff wird das Reaktionsgemisch im Vakuum (< 1,0 mbar) auf 240° C (Öl-Temperatur) unter Rühren erhitzt. Nach 120 min. ist die $H_2O$-Abspaltung beendet und die Telechel-Blockbildung praktisch vollständig. Im $N_2$-Gegenstrom werden nach dem Abkühlen auf 220 ° C 364 g (3,2 Mol) Caprolactam, 27,55 g (0,19 Mol) Adipinsäure zu dem Reaktionsansatz hinzugefügt. Das Reaktionsgemisch wird dann analog zu 7a. auf 220° C (Öl-Temperatur) erhitzt und 60 min. unter Wasserabspaltung gerührt. Nach dem Aufheizen auf 250° C (Öl-Temperatur) wird die viskose Schmelze noch weitere 90 min. bei dieser Temperatur gerührt und schließlich unter Normaldruck durch ein Wasserbad abgesponnen und granuliert. Nach der Extraktion von Caprolactam mit Wasser wird wie in 7a in der festen Phase nachkondensiert. Das farblose opake Granulat hat eine Lösungsviskosität: 1,97 $\gamma$rel (in m-Kresol, 25° C, 10 g/l).

7c. Blockcokondensat (40% PA-66, 60% Polyalkylen)

In der in 7a. beschriebenen Apparatur werden 20,4 g (100,4 mMol) Dodecandicarbonsäure, 139,1 g (0,53 Mol) A-H-Salz (Adipinsäure-Hexamethylendiamin) und 2,4 g (4%-iger Überschuß) an Hexamethylendiamin vorgelegt. nach dreimaligem Evakuieren und Belüften mit Stickstoff wird das Reaktionsgemisch unter $N_2$-Gas 1 Stunde bei 270° C gerührt, wobei abgespaltenes Reaktionswasser überdestilliert. Danach werden 163,2 g (100,4 mMol) Diaminopolyalkylentelechel mit Mn 1620 (Vorstufe II) hinzugegeben. Dabei bilden sich zunächst durch ausfallendes PA-66 2 Phasen. Man rührt eine weitere Stunde bei 270° C, wobei die Schmelze homogen wird und die Viskosität langsam zunimmt. Danach rührt man 4 Stunden bei 290° C und

erhält eine weiße, hochviscose Schmelze, die unter Normaldruck durch ein Wasserbad abgesponnen und granuliert wird. Das opake Granulat hat eine Lösungsviskosität: $\gamma$rel (in Chlorbenzol-Kresol 1:1, 25° C. 10 g/l) von 1,95.

Vorstufe II

Diaminopolyalkylentelechele

1. Hydrierstufe: (C = C-Hydrierung)

In einem 120 1-Hydrier-Autoklaven werden 36 l (28,2 kg) Isopropanol, 1 000 g 5-%iges $Pd/Al_2O_3$ - (mehrfach gebraucht) und 10 g 85-%ige Phosphorsäure vorgelegt. Dazu wird eine Lösung von 20 kg (16,66 Mol) eines Dinitrilpolybutadien-Telechel (Vorstufe I) mit der Molmasse Mn 1 200 in 36 l (28,0 kg) Cyclohexan gegeben. Nach mehrmaligem Abdrücken und Entspannen mit $H_2$ wird bei einem $H_2$-Druck von 70 bar innerhalb von 3 h unter kräftigem Rühren (100 - 150 U/min) auf 100° C aufgeheizt.

Nach $H_2$-Druckerhöhung auf 100 - 120 bar wird über 24 h bei 120° C hydriert. Nach Zugabe von 300 g neuem Kontakt ($Pd/Al_2O_3$) wird weitere 20 h bei gleichen Temperatur/Druck-Bedingungen hydriert. Nach dem Abkühlen wird die ca. 50° C warme Lösung über eine Drucknutsche filtriert. Der Kontakt wird regeneriert und das Filtrat wird in dem gleichen Autoklaven zur 2. Hydrierstufe (C≡N-Hydrierung) vorgelegt. Zu dieser Vorlage werden 2 kg Ra-Ni-Fe (85-15) (mit Methanol und Cyclohexan gewaschen) hinzugefügt. Nach dem Verdrängen von Luftsauerstoff wird bei 80 bar $H_2$-Druck unter kräftigem Rühren innerhalb von 2 h auf 100°C aufgeheizt und weitere 13 h bei 100° C und 100 bar $H_2$ hydriert. Nach dem Erkalten wird bei ca. 50 - 60° C über eine Drucknutsche filtriert. Der Katalysator wird regeneriert und das Filtrat im Vakuum (30 - 50 mm Hg) am Rotationsverdampfer bei 100° C Badtemperatur in 10 h bis zur öligen Konsistenz eingeengt. Nach dem Erkalten isoliert man 18,2 kg eines hellen, fast farblosen, wachsartigen Produkts mit einem Erweichungspunkt bei ca. 70° C.

N elem.: 2,10 %
Gesamt. basisches N. 2,03 %
primäres Amin: 1,88 %
sek. + tert. Amin: 0,15 %
Jodzahl: 25 Mn ber. 1 700

Vorstufe I

Dinitrilpolybutadientelechel (I)

In ein 40 l-Stahlautoklav werden 4,46 kg 1,2-Dichlorethan, 1,49 kg (9,08 Mol) Porofor N (Azoisobuttersäurenitril) vorgelegt. Nach dem Verschließen wird durch mehrmaliges Evakuieren und Beaufschlagen mit $N_2$ der Rest-Sauerstoffgehalt verdrängt. Dann werden unter Druck (1,5 bar, 16° C) 15,31 kg (283 Mol) Butadien einkondensiert. Unter Rühren wird der Kesselinhalt in 40 - 50 min. auf 80° C aufgeheizt und dann 12 h bei dieser Temperatur und max. 12 bar gehalten. (Bei Druckanstieg über 12 bar wurde über den Kühler entspannt.).

Nach dem Abkühlen auf 50° C wird über die Fackel entspannt und nach weiterem Abkühlen auf 0° C der Kesselinhalt über ein Monodurtuch filtriert.

Zur Aufarbeitung werden in einem Entgasungskessel 50 -60 kg Filtrat (ca. 5 Polymerisatansätze) vorgelegt und durch Entgasen mit Wasserdampf bei ca. 120° C Innentemperatur, 300 mbar mit einer Dampfmenge von ca. 17 kg/h in 5 Stunden von den flüchtigen Bestandteilen befreit. Man erhält ca. 40 kg eines klaren, schwach gelblichen, viskosen Öls (Ausbeute pro Polymerisationsansatz ca. 8,5 kg).

Analysen: Butadien(monomer): $< 1$ ppm
Tetramethylbernsteinsäuredinitril: 0,0012 %
1,2-Dichlorethan: 0.0011 %
Mn(osm): 1 100
N (%): 2.44 - 2.52 %
Mn (ber.) aus N %: 1 100 - 1 150.

II. Herstellung der Polymer-Mischungen, Verarbeitung zu Formkörpern und Prüfung

Auf einer Zwei-Wellenschnecke (Fa. Werner & Pfleiderer, ZSK 32) wurden die Komponenten mit einem Durchsatz von 8 kg/h bei einer Drehzahl von 100 U/m compoundiert. Einstelltemperatur 270° C, Massetemperatur 290° C.

Nach der Trocknung bei 80° C, 10 mbar-Vakuum, über 12 h wurden die Granulate auf einer Spritzgußmaschine des Typs Anker A 16/458, 30 mm-Einwellenschnecke bei einer Massetemperatur von 220° C - 240° C und einer Formtemperatur von 30° C - 40° C [1)]zu Prüfkörpern verarbeitet, die spritzfrisch nach den üblichen DIN-und ASTM-Normen geprüft wurden.

Die nachfolgenden Tabellen 1-6 enthalten Beispiele für erfindungsgemäße Polyamid/Polyolefin-Mischungen. Die Zusammensetzungen der Mischungen sind durch die Komponenten-Nummer in I. bezeichnet. Die mechanischen Eigenschaften sind in spritzfrischem, nichtkonditioniertem Zustand gemessen worden. Dabei bedeuten:

Zug-E-Modul: Elastizitäts-Modul nach DIN 53457
δs : Streckspannung nach DIN 53455
εs : Dehnung bei Streckspannung δs nach DIN 53455
δR : Reißfestigkeit nach DIN 53455
εR : Reißdehnung nach DIN 53455
aK : Kerbschlagzähigkeit nach:
Charpy (kJ/m²) nach DIN 53453
Izod (J/m) nach ASTM D-256
Ws : Schädigungsarbeit in (J) beim Plattendurch-Stoß-Versuch nach DIN 53443 Teil 2
Verformung beim Bruch : beim Platten durchstoß-Versuch nach DIN 53443 Teil 2
Vicat B : Wärmeformbeständigkeit nach DIN 53460

[1)] (langsames Einspritzen, Zykluszeit 42 sec. (20 sec. Kühlzeit, 20 sec. Nachdruckzeit, 2 sec. Pause).

Tabelle 1 PA-6/EPDM-Mischungen

| Nr.' I | Vergleichs-Versuch | Ia | Ib | Ic | Id | Ie | If |
|---|---|---|---|---|---|---|---|
| Komp. 4 (%) | 80 | 74 | 70 | 75 | 60 | 40 | 70 |
| Komp. 3 (%) | 20 | 20 | 20 | 15 | 30 | 50 | 20 |
| Komp. 7a(%) | - | 6 | 10 | 10 | 10 | 10 | - |
| Komp. 7b(%) | - | - | - | - | - | - | 10 |
| Zug-E-Modul (MPa) | 2120 | 1690 | 1690 | 1670 | 1110 | 600 | 1320 |
| δS (MPa) | 46 | 39 | 40 | 41 | 29 | 17 | 35 |
| εS (%) | 5,0 | 5,1 | 5,4 | 4,7 | 11,4 | 10,6 | 8 |
| δR (MPa) | 45 | 46 | 44 | 52 | 40 | 25 | 47 |
| εR (%) | 11 | 211 | 177 | 166 | 228 | 200 | 188 |
| $a_K$ ($kJ/m^2$) R.T. | 8 | 48* | 52* | 48* | 52* | 37* | 58 |
| -40° C | 4 | 9 | 13 | 10 | 13 | 61* | 8 |
| $a_K$ (J/m) R.T. | 87 | 1137 | 1113 | 1024 | 940 | 433 | 1216 |
| -40° C | 40 | 98 | 65 | 97 | 128 | 112 | 105 |
| Verformung bei Bruch (mm) R.T. | - | 24 | | 22 | 25 | kein Bruch | 23 |
| -40° C | - | 13 | | 16 | 19 | 22 | 19 |
| Bruchbild R.T. | spröd | duktil | | duktil | duktil | kein Bruch | duktil |
| -40° C | spröd | Mischbr. | | Misch-bruch | duktil | duktil | Misch-bruch |
| Vicat A (°C) | 215 | 211 | 212 | 213 | 206 | 182 | 210 |
| Vicat B (°C) | 156 | 126 | 129 | 141 | 95 | 45 | |

*Duktilbruch

Tabelle 2 PA-66 / EPDM-Mischungen

| Nr. II | Vgl.-Versuch | IIa | IIb |
|---|---|---|---|
| Komp. 5 | 50 | 47,5 | 47,5 |
| Komp. 3 | 50 | 47,5 | 47,5 |
| Komp. 7a | - | 5 | - |
| Komp. 7c | - | - | 5 |
| Zug-E-Modul (MPa) | 950 | 1010 | 1040 |
| $\epsilon R$ (%) | 14 | 178 | 130 |
| $a_n$ ($kJ/m^2$) | 26 | u.g.[1] | u.g.[1] |
| $a_K$ ($kJ/m^2$) | | | |
| R.T. | 5,2 | 35 | 19 |
| 0° C | 4,5 | 39 | 10 |
| -20° C | 3,8 | 19 | 7,4 |
| Ws (J) | | | |
| R.T. | 0,4 | 63 | 63 |
| -20° C | - | 75 | 55 |
| -40° C | - | 79 | 36 |
| Bruchbild | spröd | duktil | Misch-bruch |
| Vicat A (°C) | 237 | 238 | 240 |
| B (°C) | 67 | 73 | 74 |

1) ungebrochen

Tabelle 3 Polyamid-6/Polypropylen-Mischungen

| Nr. III | | Vgl.Versuch | IIIa | IIIb | IIIc | IIId |
|---|---|---|---|---|---|---|
| Komp. 4 (%) | | 55 | 49 | 48,5 | 47,5 | 45 |
| Komp. 1 (%) | | 45 | 49 | 48,5 | 47,5 | 45 |
| Komp. 7a (%) | | - | 2 | 3 | 5 | 10 |
| Zug-E-Modul | (MPa) | 2330 | 2245 | 2187 | 2143 | 1976 |
| δS | (MPa) | 42 | 53 | 51 | 51 | 47 |
| εS | (%) | 3 | 11 | 11 | 11 | 11 |
| δbB | (MPa) | 40 | 27 | 25 | 25 | 27 |
| εR | (%) | 5 | 76 | 71 | 77 | 92 |
| $a_K$ ($kJ/m^2$) | R.T. | 9 | 5,6 | 5,1 | 6,0 | 6,1 |
| | $-20^0$ C | 5 | 3,2 | 3,2 | 3,3 | 3,7 |
| $a_K$ (J/m) | R.T. | 90 | 59 | 54 | 59 | 73 |
| | $-20^0$ C | 36 | 42 | 30 | 30 | 20 |
| $a_n$ ($kJ/m^2$) | R.T. | 13 | n.g. | n.g. | n.g. | n.g. |

n.g. = nicht gebrochen

Tabelle 4 <u>Polyamid-6/Polypropylen-Mischungen</u>

| Nr. IV | IVa | IVb | IVc | IVd | IVe | IVf | IVg |
|---|---|---|---|---|---|---|---|
| Komp. 4 (%) | 88 | 70 | 60 | 48 | 30 | 20 | 10 |
| Komp. 1 (%) | 10 | 20 | 30 | 50 | 60 | 70 | 88 |
| Komp. 7a (%) | 2 | 10 | 10 | 2 | 10 | 10 | 2 |
| E-Modul (MPa) | 2740 | 2230 | 2160 | 2290 | 1820 | 1760 | 1700 |
| Reißfestigkeit (MPa) | 40 | 40 | 38 | 21 | 28 | 26 | 18 |
| Reißdehnung (%) | 96 | 76 | 68 | 63 | 85 | 97 | 3 |
| Kerbschlagzähigkeit | | | | | | | |
| $a_K$ (J/m) R.T. | 75 | 78 | 71 | 60 | 53 | 43 | 61 |
| -20° C | 60 | 36 | 34 | 49 | 22 | 20 | 27 |
| $a_n$ (kJ/m$^2$) R.T. | n.g. | n.g. | n.g. | n.g. | n.g. | n.g. | n.g. |
| Vicat B (°C) | 178 | 148 | 133 | 117 | 93 | 90 | 86 |
| Härte $HC_{30}$ | 128 | 88 | 79 | 90 | 59 | 57 | 64 |

n.g. = nicht gebrochen

Tabelle 5 <u>Polyamid-6 / Polypropylen-Mischungen</u>

| Nr. V | | Va | Vb | Vc |
|---|---|---|---|---|
| Komp. 4 | (%) | 35 | 68 | 36 |
| Komp. 1 | (%) | 50 | 8 | 40 |
| Komp. 3 | (%) | 10 | - | - |
| Komp. 7a | (%) | 5 | 4 | 4 |
| Komp. 6 | (%) | - | 20 | 20 |
| Zug-E-Modul | (MPa) | 1.170 | 4.400 | 6.700 |
| δR | (MPa) | 49 | 130 | 82 |
| εR | (%) | 270 | 3,3 | 2,6 |
| $a_n$ ($kJ/m^2$) | | n.g. | 42 | 21 |
| $a_K$ ($kJ/m^2$) | | | | |
| R.T. | | 46 | 12 | 18 |
| -20° C | | 14 | 7,6 | 8 |
| Vicat B (°C) | | 121 | 203 | 128 |

Tabelle 6 <u>Polyamid / Polyethylen-Mischungen</u>

| Nr. VI | | Vgl.-Vers. | VIa | VIb | VIc | VId | VIe | VIf | VIg |
|---|---|---|---|---|---|---|---|---|---|
| Komp. 4 | (%) | 80 | 70 | 88 | 48 | 10 | 88 | 48 | 10 |
| Komp. 2 | (%) | 20 | 20 | 10 | 50 | 88 | - | - | - |
| Komp. 2a | (%) | - | - | - | - | - | 10 | 50 | 88 |
| Komp. 7a | (%) | - | 10 | 2 | 2 | 2 | 2 | 2 | 2 |
| Zug-E-Modul | (MPa) | 2.240 | 1.880 | 2.680 | 1.360 | 220 | 2.500 | 1.420 | 220 |
| δR | (MPa) | - | - | 41 | 17 | 13 | 41 | 30 | 17 |
| εR | (%) | 108 | 160 | 41 | 140 | 140 | 98 | 192 | 225 |
| $a_K$ (kJ/m$^2$) | R.T. | 8 | 16 | 8 | 46 | 24 | 14 | n.g.[1] | n.g.[1] |
| | -20° C | 5 | 6 | 6 | 9 | 7 | 8 | 24 | 54 |
| $W_s$ (J) | R.T. | 1 | 70 | 113 | 83 | 46 | 125 | 91 | - |
| | -20° C | - | 18 | 4 | 49 | 3 | 70 | 25 | 80 |
| Vicat B (°C) | | 149 | 119 | 178 | 63 | - | 169 | 62 | - |

1) nicht gebrochen

## Ansprüche

1. Thermoplastische Formmassen aus
I. 1-99 Gew.-% thermoplastischen Polyamiden, und
II. 99-1 Gew.-% thermoplastischen Polyolefinen, enthaltend
III. 0,1-10 Gew.-%, bezogen auf I + II, an Blockcopolyamiden, die 0,1-80 Gew.-% lineare, hydrierte Poly-1,3-dien-Einheiten (Blöcke) mit einer Molmasse Mn von 600-6000 und 99,9-20 Gew.-% Polyamid-Einheiten (Blöcke) aufweisen.

2. Thermoplastische Formmassen nach Anspruch 1, dadurch gekennzeichnet, daß sie 1-5 Gew.-% (bezogen auf I + II) des Blockcopolyamids III enthalten.

3. Thermoplastische Formmassen nach Ansprüchen 1 und 2, dadurch gekennzeichnet, daß das Polyamid der Komponente I Polyamid-6 oder Polyamid-66 ist.

4. Thermoplastische Formmassen nach Ansprüchen 1 bis 3, dadurch gekennzeichnet, daß Homo- und/oder Copolymere der Formel
$H-A_{(n)}-B_{(m)}-C_{(k)}-H$
wobei A, B, C folgende Monomer-Einheiten bedeuten
A $-CH_2-CH_2-$, 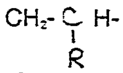
mit R = eine $CH_3$,
$C_2$-$C_{10}$-Alkyl-,
$C_2$-$C_{10}$-Alkenyl-,
$C_6$-$C_{12}$-Aryl-, -Alkylarylgruppe,
B für $-CO_2H$ oder $-CO_2M$ mit M = Na, K, Ca, Zn steht
C für einen 1,3-Butadien-, Isopren-, 1,4-Hexadien-, Ethylidennorbornen-, Dicyclopentadien-, cis, cis-Cyclooctadien-1,5 oder Methyl-endomethylen-hexahydronapthalinrest,
bevorzugte Monomer-Einheiten
$-CH_2-CH_2-$, 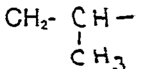
Ethylidennorbornen steht und wobei
die obengenannten Monomereinheiten vorzugsweise in folgenden Molenbrüchen enthalten sind:
n = 0,8-1,
m = 0-0,2,
k = 0-0,1,
wobei die Summe n + m + k immer 1 ergeben muß.

5. Thermoplastische Formmassen nach Ansprüchen 1 bis 4, dadurch gekennzeichnet, daß das Blockcopolyamid III 10-65 Gew.-% lineare, hydrierte Poly-1,3-dien-Einheiten, vorzugsweise hydrierte Polybutadien- und/oder Polyisopren-Einheiten, enthält.

6. Thermoplastische Formmassen nach Ansprüchen 1 bis 5, dadurch gekennzeichnet, daß das Blockcopolyamid III lineare, hydrierte Poly-1,3-dien-Einheiten eines Molekulargewichts $\overline{M}_n$ von 1000 bis 3000 enthält.

7. Thermoplastische Formmassen nach Ansprüchen 1 bis 6, dadurch gekennzeichnet, daß sie zusätzlich Füllstoffe, Verstärkungsmaterialien, Stabilisatoren, Entformungsmittel, Schmier-und Gleitmittel, Farbstoffe, Pigmente, Flammschutzmittel und gegebenenfalls andere, übliche Zusatzmittel enthalten.